(19)

**Europäisches Patentamt**
**European Patent Office**
**Office européen des brevets**

(11) **EP 4 738 039 A1**

(12) **EUROPEAN PATENT APPLICATION**

(43) Date of publication:
06.05.2026 Bulletin 2026/19

(21) Application number: 24210667.2

(22) Date of filing: 04.11.2024

(51) International Patent Classification (IPC):
**G05B 23/02** (2006.01) **H02P 29/02** (2016.01)

(52) Cooperative Patent Classification (CPC):
**G05B 23/0283; H02P 29/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **maxon international ag**
**6072 Sachseln (CH)**

(72) Inventors:
• **GITTLER, Thomas**
**6060 Ramersberg (CH)**

• **JAQUEMET, Claude**
**5643 Sins (CH)**
• **BACIGALUPO, Carlos**
**Berowra Heights, 2082 (AU)**
• **LORENZ, Timo**
**79112 Freiburg (DE)**
• **JOSHI, Mihir Yogendra**
**Westmead, 2145 (AU)**

(74) Representative: **Schenk, Markus et al**
**Schoppe, Zimmermann, Stöckeler**
**Zinkler, Schenk & Partner mbB**
**Patentanwälte**
**Radlkoferstrasse 2**
**81373 München (DE)**

(54) **CONCEPT RELATING TO THE DETECTION OF A PRESENCE OR IMMANENCE OF A FAILURE OR DEGRADATION OF A MOTORIZED SYSTEM**

(57) The training or optimization of a failure detector for detecting a presence or immanence of a failure or a degradation of a motorized system which comprises one or more closed-loop controlled electro motors may be achieved more efficiently by a more efficient generation of the dataset underlying this training, in that the more efficient generation of this dataset is achievable by providing a set of control parameters of a controller component arranged in one or more control loops of the one or more closed-loop controlled electro motors, with the settings representing different deviations from an in-use setting of the control parameters, and/or providing a set of set point signals of the one or more control loops of the one or more closed-loop controlled electro motors, the set of set point signals representing different variations of a base set point signal.

Fig. 4

## Description

The present application relates to the detection of a presence or immanence of a failure or degradation of a motorized system such as a robot or the like.

In the context of prognostics and health management (PHM) of mechatronic systems, condition monitoring approaches strive to provide early (or earlier) indications of future or imminent failures.

Obtaining run-to-failure, fault presence, or anomalous datasets for such approaches is a significant challenge. Due to the rarity of failures in many systems, especially those for high precision and safety-critical applications, the datasets containing faults, failures or relevant anomalies are scarce.

Imitating real anomalies or faults can be costly as it often requires destructive testing or extensive engineering work. Additionally, creating run-to-failure datasets is time-consuming and therefore another cost factor besides engineering and material. Amortization of these efforts is only possible if the corresponding application is produced in large quantities.

Even if we assumed that possible amortization across many produced units of a system, for which run-to-failure samples were collected and the corresponding failure mode recorded - there still remains the issue of the large variety of failure modes. Approximately 80% of occurring failures have not been recorded in this specific behavior before, making it virtually impossible to collect a broad spectrum of real application failure data.

Additionally, a remaining variable is the so-called exemplary variance. Even in mass-produced systems, each unit is subject to small variations in behavior, potentially hindering the transfer of failure modes and models trained on other units.

This scarcity hampers the development of robust data-driven prognostics models, which rely on extensive and representative data sets to predict failures or the remaining useful life (RUL) of components. Generally speaking, the effort required to obtain datasets incorporating fault, anomaly or failure cases hinders the development, the amortization and the affordability of PHM approaches.

To address this issue, the current state of the art employs several strategies. One prominent approach is the use of synthetic data generation, such as the Commercial Modular Aero-Propulsion System Simulation (C-MAPSS) model developed by NASA, which simulates realistic run-to-failure trajectories under various operational conditions. This approach has required extensive simulation and engineering of a generic jet engine, which cannot be applied directly to any specific jet engine model. Generally speaking, simulation data of mechatronic systems are often used to simulate failures or anomalous behavior. However, this does not apply to systems produced in small quantities or one-off, and it does not consider exemplary variance.

Additionally, transfer learning techniques are increasingly utilized, allowing models trained on available datasets to be adapted to new, similar systems with limited data. This means that a model is trained on application X and then used on application Y, or the model is trained on unit 1 of application X, and then applied to unit 2 (which is identical to unit 1) of application X. This is often the case if large engineering efforts are undertaken to model a specific application that is produced in large quantities, and where the engineering and (often physical) modeling effort can be subject to an amortization across the large fleet of produced units. Also, in many cases models are trained on failures recorded on a fleet of units, e.g. in some automotive components.

Another innovative method involves the integration of domain knowledge into machine learning models to enhance their predictive capabilities despite the paucity of failure data. These approaches can vary, and are usually simulation based, or depend on the setting of specific thresholds e.g. for vibrations in specific frequency ranges. They usually require very specific failure modes and extensive, deep domain knowledge.

Thus, there is a need for a concept which allows the detection of the presence or immanence of failure or degradation of a motorized system in a more efficient manner so that an amortization of the detection is easier to achieve.

Accordingly, it is the object of the present invention to provide concepts which allow for more efficient detection of a presence or immanence of a failure or degradation of a motorized system.

This object is achieved by the subject matter of the independent claims.

The present invention is based on the finding that a training or optimization of a failure detector for detecting a presence or immanence of a failure or a degradation of a motorized system which comprises one or more closed-loop controlled electro motors may be achieved more efficiently by a more efficient generation of the dataset underlying this training, and that the more efficient generation of this dataset is achievable by providing a set of control parameters of a controller component arranged in one or more control loops of the one or more closed-loop controlled electro motors, with the settings representing different deviations from an in-use setting of the control parameters, and/or providing a set of set point signals of the one or more control loops of the one or more closed-loop controlled electro motors, the set of set point signals representing different variations of a base set point signal. In particular, measuring, for each of these settings/set point signals, one or more signals occurring within the one or more control loops, or influenced by the one or more control loops during an operation of the one or more closed-loop controlled electro motors with the control parameter set according to the respective setting or the respective set point signal being applied onto the one or more control loops, enables the generation of the necessary training data set and, favorably, the setting of control parameters and/or the definition of the set point signal is a task which is by far easier than simulating the one or more signals for a motorized system suffering from a failure or a degradation or even mechanically modifying an existing motorized system to have, or to behave like having, such a failure or degradation.

A data set obtained as described in the previous paragraph may be used for training or optimizing a failure detector, namely by using this dataset to optimize a parameterization of a parametrizable mapping of such a failure detector, ought to map a measured signal obtained by measuring one or more signals within the one or more control loops of the one or more closed-loop controlled electro motors, or influenced by same, onto a detector output value which informs on the presence or immanence of the failure or degradation of the motorized system. The trained failure detector thus obtained has, owing to the possibility of achieving the training dataset in an efficient manner, a lower amortization bar.

An apparatus for failure surveillance of a motorized system comprising one or more closed-loop controlled electro motors, configured to interact with the motorized system may be designed in a manner so as to support the usage of the data set generation presented herein by comprising the failure detector in a not yet parameterized, but parametrizable state as well as an input/output interface for parameterizing the failure detector's parametrizable mapping, inputting the set of settings of control parameters and/or the set of set point signals and outputting the measured signals obtained for the set of settings of control parameters and/or set of set point signals. By this measure, the apparatus is prepared to allow for the performance of the dataset generation to obtain the dataset, a training/optimization using this dataset to obtain a parametrization of the failure detector and a following parametrization of the failure detector.

Advantageous embodiments of the present application are the subject of dependent claims.

Preferred embodiments of the present application are described below with respect to the figures among which:

Fig. 1    shows a schematic block diagram illustrating an example for a control loop of a closed-loop control system for describing same in the spectral transform domain;

Fig. 2    shows a flow diagram of a generation of a dataset for training/optimizing a failure detector ought to detect a presence or immanence of a failure or degradation of a motorized system which, in turn, comprises one or more closed-loop controlled electro motors, according to an embodiment of the present invention;

Fig. 3    shows a method for training a failure detector which makes use of the data set generated according to Fig. 2; and

Fig. 4    shows a block diagram of a motorized system, failure detector and an apparatus for surveillance of the motorized system and forms, in the description, as an illustration for the failure detector in interaction with the motorized system alone in which case the remainder of the surveillance apparatus might be left off, and an illustration of the surveillance apparatus including the failure detector, as an example for an apparatus being prepared to perform the failure detection and to assist in training the failure detection.

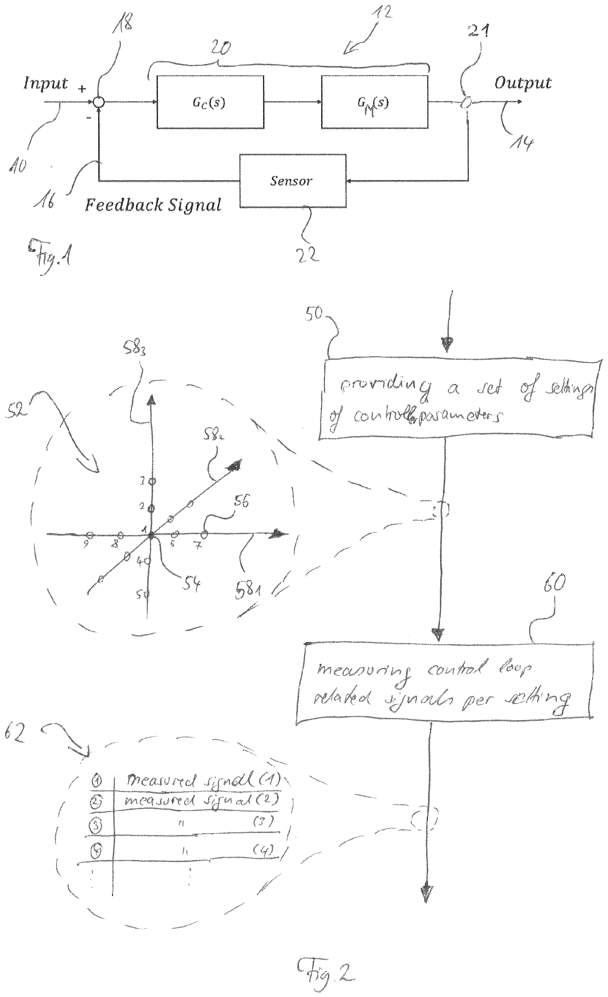

Before describing certain embodiments of the present application with respect to the figures in more detail, Fig. 1 is used in order to motivate and explain the thoughts underlying, and having led to, the subsequently described embodiments.

Fig. 1 shows a schematic block diagram illustrating, in the spectral transform domain using spectral variable s, a control loop of a closed-loop control system, namely illustrating an input or set point signal 10 entering the control loop 12, the output signal 14 of the control loop 12, a sensor 22 sensing the output 14 and feeding-back a feedback signal 16 to a subtractive input of a subtractor 18 which subtracts the feedback signal 16 from the input signal 10, and a controller 20 connected between the output of subtractor 18 and the branch 21 of the input signal to sensor 22, wherein controller 20 is shown as being decomposed into a controller component and a mechatronic component for reasons set out in more detail below.

On a very general level, a closed-loop control system as the one depicted in Fig. 1 can be divided into its controller component - or, to be more precise, its transfer function - $G_C(s)$, and its mechatronic component - or, to be more precise, its transfer function - $G_M(s)$. The combined behavior of the controller and mechatronics interacting with each other can be described by the closed-loop transfer function G(s) in state-space notation:

$$G(s) = \frac{G_C(s) * G_M(s)}{1 + G_C(s) * G_M(s)}$$

The transfer function G(s) describes the dynamic behavior and thereby a system's input/output relationship. Failures or anomalies in a closed-loop controlled system are changes in the mechatronic component $G_M(s)$ and alter, therefore, the input/output relationship of the whole system, which reflects in a change of the transfer function G(s). This change in transfer function is observable in the feedback signal of the closed-loop system, given that no prior changes are made to the input signal. Thus, a failure detector might measure signals occurring within the control loop, or influenced by the control loop, so as to detect changes in the transfer function G(s) and, thus, detect the presence or immanence of a failure or degradation of the mechatronic component. However, in order to detect such changes, the failure detector needs to be trained, i.e., it should learn how such failures/degradations manifest themselves in changes of the measured signals.

According to one idea which the subsequently explained embodiments are based on, failure-like data in a closed-loop controlled system, i.e. a data set for training, is generated via a modification of the controller parameters underlying the controller component Gc(s). That is, faults are injected through variations of the controller component Gc(s), thereby altering the system's transfer function G(s). The so-induced changes of the transfer function G(s) allow to approximate potential failures on the mechatronics component $G_M(s)$ which are observable in the feedback signal of the control loop - all while the mechatronics $G_M(s)$ remain unchanged. In other words, it is possible to emulate degradations of the mechatronics indirectly via corresponding modifications of the controller parameters underlying controller component $G_C(s)$. Here, the controller parameters underlying controller component $G_C(s)$ may apply to of the feedback loop 12 such as the PID (proportional, integral, differential) gains.

It should be noted that other than illustrated in Fig. 1, the feedback loop can be composed of multiple controller loops, i.e. sub-PID controllers, such as one position control loop, one velocity control loop, a current control loop or others. That is, although the variation of the controller parameters could be restricted onto the PID controllers of position and velocity loop, this is only an example and the controller parameter modification could be applied onto any part of the controller 20 forming the transfer function G(s).

Additionally or alternatively, it could be possible to alleviate the generation of failure-like data by varying the set point signal, thereby varying s in the formula. This alternative is described in more detail below.

After having described thoughts which led to the subsequently explained embodiments, reference is made to Fig. 2 which shows a flow diagram of a generation of a dataset for training/optimizing a failure detector ought to detect a presence or immanence of a failure or degradation of a motorized system which, in turn, comprises one or more closed-loop controlled electro motors. The failure detector is to perform the detection based on a measurement of one or more signals occurring within the one or more control loops, or influenced by the one or more control loops during an operation of the one or more motors. That is, this data set enables a training algorithm to train a parametrizable mapping - or, in different terms, a parametrizable model - to discriminate between a measured signal obtained by a motorized system suffering from a failure or degradation, or being close to suffering therefrom, from a measured signal obtained by a motorized system which does not suffer from any failure or degradation, or is not close to suffering therefrom.

The method of Fig. 2 starts with a provision 50 of a set of settings of controller parameters of a controller component arranged in one or more control loops of the one or more closed-loop controlled electro motors of the motorized system such as controller 20 of Fig. 1 or, to be more precise, component Gc(s) thereof. The provision is done in a manner so that the set of settings of the controller parameters represent different deviations from an in-use setting of the controller parameters, i.e., from a setting which the controller component uses during a normal mode of operation of the motorized system.

The provision 50 may be performed in a manner so that the in-use setting is part of the set of settings or not. See, for instance, Fig. 2 which illustrates the set 52 of settings by illustrating each setting as a small circle. One of the settings shown is shown using a filled circle, namely circle 1. This circle shall illustrate the in-use setting 54. The deviation of the other settings 56 from this setting 54 is illustrated by the fact that these settings are displaced from the in-use setting 54. Set 52 may include the in-use setting 54 or may exclude same. Both options are feasible.

Further, Fig. 2 illustrates as to how the set 52 of settings may be determined in step 50. In particular, Fig. 2 illustrates the settings to be arranged in a three-dimensional space spanned by three axis $58_1$ to $58_3$. In fact, each axis $58_i$ might correspond to one of the parameters among the controller parameters, i.e., to parameter i. In this regard, it should be noted that the number of controller parameters is not restricted to be three, it may be larger than that or smaller than that. One axis, for instance, may represent the proportional gain or P gain. It should be noted that this P gain might not be attributable to exactly one of the controller parameters. Rather, a subset of the controller parameters or a vector having a component for each of the controller parameters in order to form a linear combination of these controller parameters might determine the P gain. Varying the P gain relative to the in-use setting 54 provokes oscillations and instabilities into the control loop and, accordingly, is able to emulate mechanical wear and lose mechanical connections such as loose screws. Axis $58_1$, for instance, may represent the P gain axis. Another axis $58_2$ may represent the integration gain or I gain of the controller component. Varying the I gain might cause motor movements to become slower or cause overshoots, thereby emulating high static and viscose friction such as caused, for instance, by too little lubrication or by friction due to abrasion of foreign bodies, pitting on flanks of teeth of a gear or the like. Again, the I gain may correspond to one of the controller parameters or might be formed, or be associated with, a linear combination thereof. Axis $58_3$ might correspond to a variation in derivative gain or D gain. A deviation in D gain relative to the in-use setting 54 may cause excessive reactions onto any kind of changes such as caused by a stacking joint. Again, the D gain may correspond to one of the controller parameters or might be formed, or be associated with, a linear combination thereof.

Accordingly, as illustrated in Fig. 2, it might be that the set of settings is provided in step 50 in a manner so that the settings 56 vary around the in-use setting 54 to deviate from the in-line setting 54 in terms of one or more of P, I or D gain. For instance, a subset of the settings such as settings 9, 8, 6 and 7 could deviate from the in-use setting in terms of P gain, while a different subset such as settings 2 to 5 could deviate from the in-use setting 54 in terms of D gain and so forth. However, this is only an example and it could be possible that the step 50 involves the determination of the set 52 in a manner so that the individual settings 56 of set 52 are not grouped into such subsets deviating from the in-use setting 54 exclusively in such common dimension or axis. Moreover, embodiments of the present application are not restricted to determine set 52 in a manner so that the deviation of settings 56 from the in-use setting 54 are clearly attributable to certain deviations in P gain, I gain and/or D gain. Rather, a different type of deviation, or different types of deviations, might be used.

Moreover, it has already been mentioned that a number of controller parameters might be large and that the relationship between these controller parameters on the one hand and each of the P gain, I gain and/or D gain might be more complex than a clear attribution of one of the controller parameters to any of these gains. Generally speaking, controller parameters may comprise weights for weighting one or more of A) output signals of the one or more control loops, B) following error signals within the one or more control loops, C) an affine combinations thereof, and D) a transformed version of one or more of signals A, B and C such as an integral thereof, a derivative thereof or a filtered version thereof. Other intermediate signals occurring within a control loop might additionally or alternatively be used and be combined in combination according to C such as the output of a limiter connected to the control loop. Further, controller parameters might also relate to weights of one or more filters connected into the one or more control loops.

Further, although Fig. 2 suggests that the set 52 of settings comprise deviations from the in-use setting 54 along a certain axis into two opposite directions, it might be that the deviation realized by set 52 only goes into one direction for a certain axis.

The determination of set 52 might be done automatically or half-automatically or by an expert. For instance, one or more axes 58 of deviation might be defined by an expert such by defining certain controller parameter vectors, with then defining at least one or more of the settings 56 as a predetermined number of deviations from the in-use setting 54 alongside any of these vectors. The determination may even involve the usage of advanced algorithms, such as a neural network for testing certain controller parameter variations from the in-use setting 54 and analyzing the resulting change in one or more signals occurring within one or more of the control loops, or influenced by the one or more control loops, wherein the analysis may also be performed with a different analysis concept than a neural network. Bayesian optimization might be used, too, i.e. a Bayesian belief network. However, the list of possibilities shall not be interpreted as being complete and shall not exclude the possibility of using other methods for the determination of set 52. Again, one or several of these weights might be attributed to a change in P gain, I gain and/or D gain in determining set 52.

Again, the in-use setting 54 may be part of set 52 or may not be part thereof.

After set 52 having been provided, one or more control loop related signals are measured for each of the settings of set 52. That is, a measurement 60 takes place while the motorized system is operating. During this measurement 60 a set point signal is applied to the one or more control loops of the electro motors of the motorized system. Same may, for instance, be selected so that same is equal for all settings or, to be more precise, equal for the measurement performed for all settings. This set point signal might, for instance, correspond to a micro pirouette or micro movement or to one or more brief and sudden twitches such as, for instance, a brief and abrupt acceleration into one direction followed by a corresponding abrupt brake or deceleration with then performing an abrupt acceleration into the other direction, opposite to the first, followed by a corresponding brake or deceleration. However, it should be noted that the equality in set point signal during the individual measurements taken for each setting in step 60 might apply, but may also be deviated from. For instance, the set point signals used for the individual settings of set 52 during step 60 may mutually slightly differ as long as, for instance, the measured signals deviate by less than 10% at otherwise equal measuring conditions, such as measuring conditions in terms of measurement environment and degree of wear of the motorized system. The set point signal might also be varied between the individual measurements for the settings in that, for instance, only a portion of the set point signal is actually used for the measurement. For instance, taking the four pulses in the measurement signal as an example - i.e., accelerating pulse into first direction, deceleration to stop movement in the first direction, acceleration into a second (opposite) direction, deceleration to stop movement into second direction - it could, for instance, be that the information density gained by the measurement 60 is higher during some of the pulses such as the second and third, and variations could be used for the set point signals during the cycles of the other two pulses.

Lastly, and as also shown in Fig. 2 exemplary, it might be that set 52 is provided in step 50 in a manner so that set 52 comprises for each "direction of deviation" or deviation along a certain axis, respectively, not only one setting 56 deviating from the in-use setting 54 along the respective direction or axial direction, but also one or more intermediate settings deviating from the in-use setting 54 along the same direction or axis, but at a lower intensity of deviation measured, for instance, according to a certain norm such as the $l_1$ or $l_2$ norm.

Further, for each setting in step 52, the deviation of the respective setting from the in-use setting 54 may be attributed to a target detector output value. In other words, each setting of set 52 may be attributed to a value which indicates whether this setting emulates a condition of the motorized system which is free of any presence or immanence of a failure or degradation of the motorized system, or is representative for such presence or immanence. The attributed detector target output value might not only be binary, but could also be n-ary with n>2, wherein the intermediary values may be interpretable as intermediate conditions on a way from a failure/degradation free motorized system towards one suffering from such presence or immanence of a failure or degradation, or representing intermediate likelihood values between surely not suffering and surely suffering. This attribution may be performed by tagging each measured signal, i.e. the measured signal obtained for each setting in set 52, with the attributed detector output value. The combination forms then a data item of the data set. It should be noted, however, that the attribution is not mandatory and that, for instance, all measured signals could be interpreted as being associated to a state of a presence or immanence of a failure or degradation.

As to the one or more control loop related signals measured during each of the settings of set 52, the following is noted. The one or more signals might occur within the one or more control loops during the operation of the motorized system, or might be selected so that they are at least influenced by the control loop. For instance, the one or more signals measured may comprise one or more of a) one or more feedback signals within the one or more control loops, b) one or more output signals output by the one or more control loops, c) one or more following error signals within the one or more control loops, i.e., the signal entering controller 20, e) one or more other intermediate signals occurring within the control loop such as the limited signal occurring at the output of a limiter which might optionally be connected into the control loop 12, f) one or more filtered versions of any of signals a) to d) filtered by, for instance, an FIR filter, and g) one or more signals which depend on one or more of signals a) to f).

Accordingly, as an output of step 60, a measured signal is obtained for each setting as indicated in Fig. 2 at 62 where a table is shown which holds a measured signal for each setting. Note that for each setting, the measurement in step 60 may involve a sequential measurement of the one or more signals during the operation of the motorized system, i.e., during the aforementioned application of the set point signal, or during the twitch movement, respectively. The measurement signal may, thus, be a waveform signal or a temporal signal, respectively.

As a result of measurement 60, a data set is obtained, namely, as depicted at 62 in Fig. 2, for each setting, a combination of the target detector output value attributed to the corresponding setting and the measurement signal obtained for the respective setting. Thus, the data set allows for training a failure detector to discriminate between the one or more signals occurring within the one or more control loops, or influenced thereby, when gained by a failure/degradation affected motorized system, from ones gained from an unaffected motorized system in that the data set in 62 comprises measured signal examples and attributes each of these measured signals to a target detector output value, i.e., a value indicative of whether this measured signal belongs to a presence or immanence of a failure or degradation, or not, or whether and where it is inbetween.

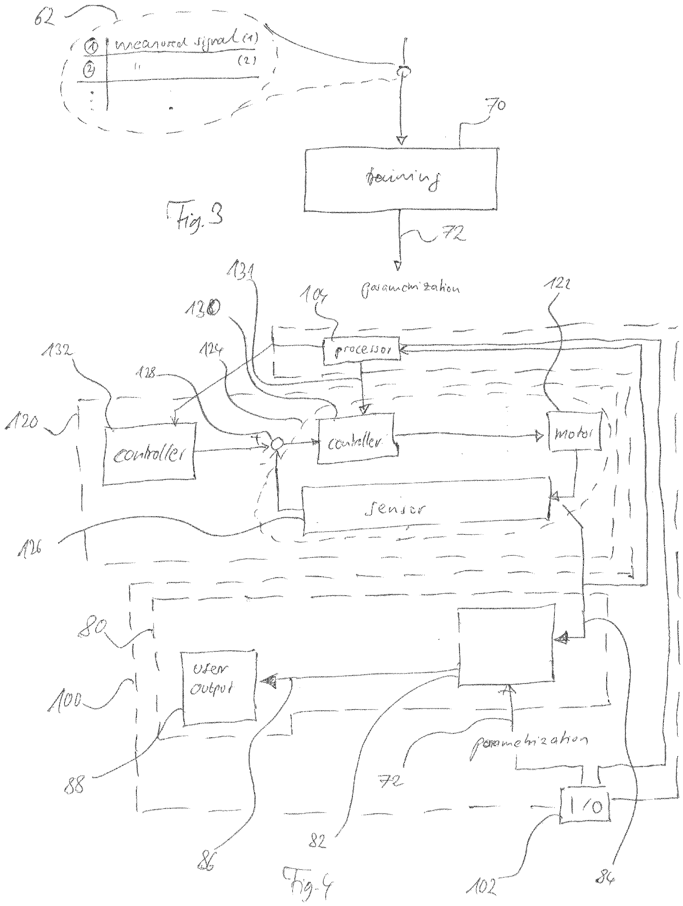

As shown in Fig. 3, the data set 62 obtained in Fig. 2 may then be subject to a training, i.e., an optimization scheme for optimizing a parametrizable mapping or parametrizable model, ought to map the one or more signals within the one or more control loops, or influenced thereby, onto a detector output value informing on the presence or immanence or failure or degradation of the motorized system. That is, the parametrizable mapping or model thus trained is for use in a failure detector an example for which is discussed in the following with respect to Fig. 4, and the one or more signals subject to this parametrizable mapping or model might be measured during operation of the one or more closed-loop control electro motors with a controller parameter set according to the in-use setting 54.

The training 70 in Fig. 3 to which the dataset 62 is subject, might, for instance, involve a gradient descent method in case of the parametrizable mapping or parametrizable model being a neural network, but other examples are available as well. For instance, the parametrizable mapping or model may be a machine learning model, a system identification model, a classification, clustering or partitioning model, a statistical embedding model, a model based on statistical variances or distributions, a model based on a distance comparison including, but not limited to Euclidean, Manhattan or Jaccard distance, or some other sort of parametrizable mapping or parametrizable model. Within this application, the term parametrizable mapping is interpreted as covering all sorts of multi-varied functions or all sorts of models mapping the measured signal obtained by measuring the one or more signals occurring in, or influenced by, the one or more control loops onto the wanted detector output value.

The output of training 70 is, thus, a parametrization 72, namely the parametrization of this parametrizable mapping. That is, for instance, in case of the parametrizable mapping being a neural network, the parametrization 72 comprises neural weights controlling the forwarding of the neuron activations from neurons to their successor neurons during an interference, i.e., a mapping onto a detector output value, and in case of the parametrizable mapping being a statistical model, the parametrization might include statistical values, for instance. For instance, in addition to the statements provided above, the parametrizable mapping may represent a multi-step approach which subjects the measured signal to one or more transformations with subsequent parametrizable normalizations wherein, based on the normalized one or more transforms, a metric is computed which, by aid of, such as by comparison with, certain thresholds, yields the detector output value informing on the presence or immanence of the failure or degradation.

Figs. 2 and 3, concatenated one after the other, yields, thus, a method for generating a parametrization for a failure detector. In line with a corresponding statement below, Figs. 2 and 3, concurrently, describe the functionality of corresponding apparatuses.

Reference is made now to Fig. 4 in order to illustrate 1) a failure detector 80 parametrized using parametrization 72 and/or 2) an apparatus 100 for surveillance of a motorized system comprising one or more closed-loop controlled electro motors. For illustrating the failure detector 80 alone, the apparatus 100 might be left off.

Fig. 4 illustrates the motorized system at 120. The motorized system 120 may be any self-driving vehicle such as a rover or self-driving boundary element, a robot such as robots in automated laboratories such as a pipetting apparatus or a sample handler, or any other machine having at least one movable part such as a production machine. The motorized system may, for instance, be dedicated to be used in the medical field such as an operation robot. Other fields of views may comprise air and space travel or mobility such as a means for adjusting a spoiler, setting a valve, or the motorized system may be used for changing the aerodynamic setting of a chassis or controlling a suspension. The list of possible examples for system 120 shall not be interpreted as excluding other examples not mentioned here.

The motorized system 120 is simplified in Fig. 4 to comprise one electromotor 122, closed-loop controlled via a control loop 124 into which the motor 122, a sensor 126, a subtractor 128 and a loop controller 130 are serially connected, wherein the subtractor is connected into this control loop with the subtracting input receiving the output from sensor 126 while the other (additive) input is connected to the output of a controller 132. As became clear from the above discussion, more than one control loop 124 may be present to control the motor 122 and additionally or alternatively the motorized system 120 may comprise more than one motor 122.

As said, Fig. 4 illustrates an example for a failure detector 80. This failure detector 80 comprises the mapping or model 82 ought to map the one or more signals 84 measured as occurring in the one or more control loops 124 of the motorized system 120, or influenced by the one or more control loops 124, onto a detector output value 86 and as depicted in Fig. 4, the failure detector 80 may comprise a user output 88 which, based on the detector output value 86, informs a user on any failure or degradation such as by presenting the detector output value to the user, or informing the user when the detector output 86 fulfils a predetermined criterion which is indicative of a situation wherein the presence or imminence of the failure or the degradation of the motorized system is likely to occur. The user output 88 may, for instance, comprise a screen, a loud speaker and/or a light and/or may optically, by sound, or otherwise, perform the user output.

The failure detector might be connectable to the motorized system 120, or might be connected to the motorized system 120, in a manner so as to actually perform the measuring of the one or more signals 84 or so as to receive the measured signal obtained by measuring the one or more signals 84 so that the measuring of the one or more signals 84 is done during an operation of the one or more closed-loop controlled electro motors 122 with the controller parameters set according to the in-use setting.

The failure decoder 80 may be in a state where the mapping or model 82 is already parametrized using parametrization 72. That is, the parametrization might be fixed or, in other words, the failure detector 80 might not be (re-)parametrizable. However, the failure detector 80 of Fig. 4 when being built into apparatus 100 is parametrizable via a parametrization input from outside via an input/output interface 102 of apparatus 100. Via this input/output interface 102, the parametrization 72 may be applied onto such parametrizable mapping or model after having gained this parametrization using training 70 of Fig. 3.

Similarly to the parametrizability of mapping/-model 82, controller 130 may have its controller parameters 131 fixedly set to the in-use setting 54, or controller 130 may be parametrizable from outside. In the example of Fig. 4, wherein the apparatus 100 shall be illustrated in Fig. 4, controller 130 is parametrizable and receives, for instance, its controller parameters 131 from a processor 104 of the apparatus 100. In case of using Fig. 4 for illustrating the failure detector 80 alone, no capability for parametrizing controller 130 may apply. Rather, the latter might be fixedly operate according to the in-use setting 54.

The apparatus 100 is an example for an apparatus which may be configured to interact with a motorized system 120. That is, it may be attached to, or coupled with, the motorized system 120 to result in, or realize a failure surveillance of the motorized system 120. The apparatus 100 comprises the failure detector 80 with the mapping/model 82 being parametrizable via the input/output interface 102, comprises the input/output interface 102 as well as processor 104. The processor 104 is configured to receive a measured signal obtained by measuring the one or more signals within, or influenced by, the one or more control loops, i.e., the measured signal obtained from the one or more signals 84, and is coupled with the input/output interface 102. The processor 104 acts in a manner so that the apparatus 100 is switchable between several operation modes including, for instance, a dataset generation mode, at least one effective operation mode and a failure detection mode. In the dataset generation mode, the set 52 of settings is received via the input/output interface 102 and for each of the settings in the set 52, processor 104 interacts with controller 132 of the motorized system 122, to activate the motorized system to operate with the controller parameters 131 being set via processor 104 according to the respective setting, wherein the measured signal thus obtained for each setting from the one or more signals 84 is output via the input/output interface 102. Thus, a method according to Fig. 2 may easily be performed using apparatus 100 by providing apparatus 100 from outside with set 52 and receiving, via input/output interface 102, the measured signal for each setting in set 52. In the at least one effective operation mode, the motorized system 120 is activated to operate with the controller parameters 131 being set according to the in-use setting 54. In the failure detection mode, in turn, apparatus 100 activates the motorized system also with the controller parameters 131 being set according to the in-use setting 54 with additionally subjecting the measured signal obtained during the operation using the in-use setting to the mapping/model 82.

A note shall be made as to the juxtaposition of processor 104 and controller 130: the processor does not have to be physically separated from the controller. Rather, both may be, or may comprise different software running on the same hardware. The processor 104 might be realized by a few lines of software code, and the same may additionally or alternatively apply to the controller. A similar statement is true for the other components shown in Fig. 4 such as the "model" 82.

With respect to the setpoint signal used in the data set generation mode on the one hand and the failure detection mode on the other hand, a similar statement is true as done before with respect to the setpoint signal used during the measurement for each setting of set 52. That is, while equality for the setpoint signal may apply between both modes, a slight variation may also apply such as one which, in case of no other amendment, leads to no more than 10 percent variation of the measured signal.

It should be mentioned that the apparatus 100 may be designed as such that the failure detection mode is, in fact, one of the at least one effective operation modes.

So far, the embodiments presented with respect to the figures concentrated on the case where the dataset for training has been obtained by a variation of the controller parameters. However, additionally or alternatively, the change in transfer function G(s) of the control loop due to a presence or immanence of a failure or degradation of the mechanical part of a closed-loop controlled motorized system is emulated by a variation of the setpoint signal. That is, in this case, the step of providing 50 comprises providing a set of setpoint signals of the one or more control loops of the one or more closed-loop-controlled electro motors, with the set of setpoint signals representing different variations of a base setpoint signal which might correspond to the aforementioned setpoint signal causing the twitch movements. For each of the setpoint signals, during step 60, the one or more signals might be measured with applying the respective setpoint signal to the one or more control loops so as to obtain the measured signal. The base setpoint signal would then be used by the failure detector during failure detection.

Naturally, both concepts may be mixed, i.e., the dataset generation may rely on both, measured signals derived by a variation of controller parameters and measured signals derived by a variation of setpoint signals. Moreover, it should be noted that the dataset, additionally, may be enriched by measured signals obtained by a simulation or by real mechanical modifications of the motorized system. Thus, the above embodiments provided, inter alias, a possibility for fault injection in a closed-loop control system for prognostics and health management (PHM) purposes. As already indicated above, the one or more signals measured during generating the dataset or during failure detection, may not only comprise the feedback signal itself, but could alternatively or additionally relate to any electrical or mechanical property such as position, following arrow, current, force or torque measureable within or at the boundary of the closed-loop control system.

Owing to the fact that the embodiments described above only require a variation of the controller parameters and/or the setpoint signal, neither simulation models need to be assessed or determined, nor an altering of the mechatronics component is necessary. It is also not necessary to spend efforts on constructing fault or failure modes to obtain the failure or anomalous data. This significantly reduces the engineering effort to obtain failure or anomalous data to a fraction of what is usually needed. This also implies that it is not necessary to spend specifically skilled workforce besides the usual application engineer parametrizing the controller. No additional materials or equipment is necessary to generate failures or anomalies. No additional measurement equipment is necessary as the signals typically used for PHM approaches of the embodiments described above are present on the controller anyway. The time required to alter a controller parameter such as PID parameter is close to zero and can be done in minutes. The failure or anomaly data can be generated directly at the application itself, suitable for on-off systems and considering the exemplary variants. The data for failures or anomalies can be recorded in a real-world application setting and not just in sterile/laboratory-like settings without the usually expected noise and disturbances. It is possible to generate virtually any infinite number of samples for training or training PHM models and algorithms. Further, it is possible to not only generate failures and anomalies but also intermediary states, thereby allowing to validate and fine-tune the detector model according to a desired outcome such as an early alert, late alert and so forth.

The embodiments described above are universally transferable across closed-loop controller systems as long as the controller parameter variation does not cause any unforeseeable hazards or dangers. Thus, only negligible effort and zero additional equipment is required to generate failure and anomaly data on virtually any closed-loop control system.

As already described above, it may be possible to simulate fault injection by way of altering the input signal, i.e., the setpoint signal. This variation may be done in a manner as to result into altered closed-loop feedback signals similar to those attainable by the change or variation of the controller parameters and this, also, without any changes of the transfer function. For example, two different movement trajectories could be used in which one simulates a lag during acceleration, or a lower jerk movement, to obtain a feedback signal corresponding to a faulty system. This would correspond to altering the independent variable "s" of the transfer function of Fig. 1 in a manner that allows to create feedback signals having like anomalies, while pretending the input signal had not been altered.

Thus, above concepts enable to offer data-driven services to customers using motorized systems. The embodiments, inter alias, revealed an approach to effectively attain a detector that can monitor the health condition of a system. This could help to prevent or at least warn before failures.

The approaches enable to attain a detector which monitors an entirety of a kinematic chain attached to an output shaft of a motor or gearbox. The embodiments relate to condition monitoring or condition-based maintenance (CBM), in commercial terms also often subsumed under the umbrella term of predictive maintenance, remaining useful lifetime (RUL) estimation, or anomaly detection. The embodiments described enable to effectively detect changes in the behavior of a mechatronic system that can be attributed to wear, collisions, fatigue or other types of internal or external influences causing a deviation from a normal operating state. This deviation form a normal operating state can either be a drift or a sudden change of behavior. The challenge in detecting these changes is to tell normal changes in behavior (e.g. settling of mechanical components or loss of pre-tension after the initial run-in phase, changes of environmental influences such as humidity or ambient temperature) from abnormal changes (e.g. excessive wear, collisions, lack of maintenance, loose components). While this is generally technology feasible, both the potential to install sensors and to engineer faulty datasets are limited by cost and related amortization factors. The embodiments described herein provide a principle that allows to be used on all customer applications equipped with a closed-loop controller, without additional sensors ("motor as a sensor"), with virtually zero engineering effort.

Although not escribed in detail above, it is clear that the failure detector measurements may be performed on a regular or irregular basis at any suitable (mean) interval. As to measurements length, the measurements performed while using the in-use controller parameter setting and/or while applying the base setpoint signal, which corresponding to reference cycles, might be, for instance, a few seconds of duration long such as shorter than 30 seconds. As described, the setpoint signal used for detection may comprise multiple reference cycles describing twitches. The reference cycles do not necessarily have to describe a cyclic back-and-forth movement. Rather, it can also be part of a stationary operating state such as running at a constant speed for a set time. The reference cycle data collection is involved in both modeling purposes, as well as for condition diagnoses and prognosis throughout the lifetime of the application.

Although some aspects have been described as features in the context of an apparatus it is clear that such a description may also be regarded as a description of corresponding features of a method. Although some aspects have been described as features in the context of a method, it is clear that such a description may also be regarded as a description of corresponding features concerning the functionality of an apparatus.

Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

In the foregoing Detailed Description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus the following claims are hereby incorporated into the Detailed Description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

The above described embodiments are merely illustrative for the principles of the present disclosure. It is understood that modifications and variations of the arrangements and the details described herein will be apparent to others skilled in the art. It is the intent, therefore, to be limited only by the scope of the pending patent claims and not by the specific details presented by way of description and explanation of the embodiments herein.

List of references

| | |
|---|---|
| 10 | input signal / set point signal |
| 12 | control loop |
| 14 | output signal |
| 16 | feedback signal |
| 18 | subtractor |
| 20 | controller |
| 50 | provision of set of settings of controller parameters |
| 52 | set of settings of controller parameters (each setting illustrated as a small circle) |
| 54 | in-use setting |
| 56 | settings deviating from in-use setting |
| 58i | three axes (I = 1... 3) |
| 60 | measurement of control loop related signals per setting |
| 62 | data set |
| 70 | training |
| 72 | parametrization |
| 80 | failure detector |
| 82 | mapping / model |
| 84 | one or more signals (occurring within, or influenced by, control loop(s)) |
| 86 | detector output value |
| 88 | user output |
| 100 | Apparatus for failure surveillance |
| 102 | input/output interface |
| 104 | processor |
| 120 | motorized system |
| 122 | motor (electromotor) |
| 124 | control loop (controlled closed-loop) |
| 126 | sensor |
| 128 | subtractor |
| 130 | (loop) controller / controller component |
| 131 | controller parameters |
| 132 | controller |

G(s)     controller transfer function
$G_M(s)$     mechatronic component's transfer function
$G_C(s)$     controller component's transfer function

**Claims**

1. Method for generating a data set for training a failure detector (80) configured to detect a presence or immanence of a failure or degradation of a motorized system (120) comprising one or more closed-loop controlled electro motors (122), the method comprising

    providing (50) a set (52) of settings (54;56) of controller parameters (131) of a controller component (130) arranged in one or more control loops (124) of the one or more closed-loop controlled electro motors (122), the settings representing different deviations from an in-use setting (54) of the controller parameters (131),
    for each of the settings (56;(54,56)) of the controller parameters (131), measure (60) one or more signals (84) within the one or more control loops (124) or influenced by the one or more control loops (124) during an operation of the one or more closed-loop controlled electro motors (122) with the controller parameters (131) set according to the respective setting (56;(54,56)) so as to obtain a measured signal, and/or
    providing a set of setpoint signals (10) of the one or more control loops (12) of the one or more closed-loop controlled (124) electro motors (122), the set of setpoint signals representing different variations of a base setpoint signal,
    for each of the setpoint signals (10), measure one or more signals within the one or more control loops (124) or influenced by the one or more control loops (124) during an operation of the one or more closed-loop controlled electro motors (122) with applying the respective setpoint signal (10) onto the one or more control loops (124) so as to obtain a measured signal.

2. Method according to claim 1, further comprising

    for each of the settings (56;(54,56)) of the controller parameters (131),
    attributing the deviation of the respective setting (56;(54,56)) from the in-use setting (54) of the controller parameters (131) to a target detector output value,
    wherein, for each of the settings (56;(54,56)) of the controller parameters, a combination of the measured signal obtained for the respective setting and the target detector output value attributed to the deviation of the respective setting (56;(54,56)) from the in-use setting (54) of the controller parameters (131) forms a data item of the data set.

3. Method according to any of claims 1 to 2, further comprising
    subjecting (70) the data set (62) formed by the measured signals obtained for the settings (56;(54,56)) of the controller parameters (131) and the deviations of the settings (56;(54,56)) from the in-use setting (54) of the controller parameters (131) to an optimization scheme for optimizing a parametrizable mapping ought to map the one or more signals (84) within the one or more control loops (124) or influenced by the one or more control loops (124) during an operation of the one or more closed-loop controlled electro motors (122) with the controller parameters (131) set according to the in-use setting (54) onto a detector output value (86) informing on the presence or immanence of the failure or degradation of the motorized system (120).

4. Method according to any of claims 1 to 3, wherein the one or more signals comprise one or more of

    a) one or more feedback signals (16) within the one or more control loops (124),
    b) one or more output signals (14) output by the one or more control loops (124),
    c) one or more following error signals within the one or more control loops (124),
    d) one or more signals which depend on one or more of a), b) and c).

5. Method according to any of claims 1 to 4, wherein the controller parameters comprise weights for weighting one or more of

    A) output signals (14) of the one or more control loops (124),
    B) following error signals within the one or more control loops (124),
    C) affine combinations thereof,
    D) a transformed version of one or more of A, B, and C, such as an integral and a derivative, and
    E) one or more signals which depend on one or more of A) to D).

6. Method according to any of claims 1 to 5, wherein the settings (56;(54,56)) deviate from the in-use setting (54) with respect to weights in a manner resulting in, compared to the in-use setting (54), one or more of

    different differential gain,
    different integral gain,
    different proportional gain.

7. Method according to any of claims 1 to 6, wherein the parametrizable mapping is

a multivariate function,
a machine learning model.

8. Method according to any of claims 1 to 7, wherein the motorized system (120) is a self-driving vehicle, a robot, or a machine having at least one movable part.

9. Method according to any of claims 1 to 8, wherein, for each of the settings (56;(54,56)) of the controller parameters (131), the measuring (60) the one or more signals (84) within the one or more control loops (124) or influenced by the one or more control loops (124) during the operation of the one or more closed-loop controlled electro motors (122) with the controller parameters (131) set according to the respective setting (56;(54,56)) is performed by operating the one or more closed-loop controlled electro motors (122) using a setpoint signal (10) which is equal for all settings or results, at equal measuring conditions in terms of measurement environment and degree of wear of the motorized system, in less than 10% variation of the measured signals.

10. Failure detector for detecting a presence or immanence of a failure or degradation of a motorized system (120) comprising one or more closed-loop controlled electro motors (122), configured to

obtain, from one or more signals (84) within one or more control loops (124) of the one or more closed-loop controlled electro motors (122) or influenced by the one or more control loops (124) during an operation of the one or more closed-loop controlled electro motors (122), a measured signal, and
map, using a mapping, the measured signal onto a detector output value (86) informing on the presence or immanence of the failure or degradation of the motorized system (120), the mapping being parametrized by use of a data set (62) gained by the method according to any of claims 1 to 9.

11. Failure detector according to claim 10, wherein the measuring the one or more signals within one or more control loops of the one or more closed-loop controlled electro motors (122) or influenced by the one or more control loops (124) during an operation of the one or more closed-loop controlled electro motors (122) is performed with

the controller parameters (131) set according to the in-use setting (54), and/or
applying the base setpoint signal onto the one or more control loops (122).

12. Apparatus for failure surveillance of a motorized system (120) comprising one or more closed-loop controlled electro motors (122), the apparatus

being configured to interact with the motorized system (120),
comprising a failure detector (80) for detecting a presence or immanence of a failure or degradation of the motorized system (120), and
comprising an input/output interface (102), the apparatus being switchable between several operation modes including

a data set generation mode,
at least one effective operation mode and
a failure detection mode, which may be one of the at least one effective operation mode or separate therefrom,

the apparatus being configured to operate according to a) and/or b), namely, in the data set generation mode,

a) receive a set (52) of settings (56;(54.56)) of controller parameters (131) of a controller component (130) arranged in one or more control loops (124) of the one or more closed-loop controlled electro motors (122), via the input/output interface (102), for each setting of the set (52) of settings (56;(54, 56)),

activate the one or more closed-loop controlled electro motors (122) to operate with the controller parameters (131) set according to the respective setting, measure one or more signals (84) within the one or more control loops (124) or influenced by the one or more control loops (124) during the one or more closed-loop controlled electro motors (122) operating with the controller parameters (131) set according to the respective setting (56;(54, 56)) so as to obtain a measured signal, output the measured signal via the input/output interface (102), and/or

b) receive a set of setpoint signals of the one or more control loops (124) of the one or more closed-loop controlled electro motors (122), the set of setpoint signals representing different variations of a base setpoint signal, for each setting of the set of settings,

activate the one or more closed-loop controlled electro motors (122) to operate with the controller parameters (131) set according to the respective setting,

measure one or more signals within the one or more control loops (124) or influenced by the one or more control loops (124) during the one or more closed-loop controlled electro motors (122) operating with the controller parameters (131) set according to the respective setting so as to obtain a measured signal,

output the measured signal via the input/output interface (102),

in at least one of the at least one effective operation mode,

activate the one or more closed-loop controlled electro motors (122) to operate with a) the controller parameters (131) set according to the in-use setting (54),

in the failure detection mode,

activate the one or more closed-loop controlled electro motors (122) to operate with a) the controller parameters (131) set according to the in-use setting (54) and/or the base setpoint signal being applied onto the one or more control loops (124),

measure the one or more signals (84) within the one or more control loops (124) or influenced by the one or more control loops (124) during the one or more closed-loop controlled electro motors (122) operating with a) the controller parameters (131) set according to the in-use setting (54) and/or b) the base setpoint signal being applied onto the one or more control loops (124) so as to obtain a further measured signal,

map, using a parametrizable mapping, the further measured signal onto a detector output value (86) informing on the presence or immanence of the failure or degradation of the motorized system (120), the parametrizable mapping being parametrized via the input/output interface (102).

13. Apparatus according to claim 12, configured to perform the activation of the one or more closed-loop controlled electro motors (122) in

the data set generation mode, and the failure detection mode,

using a setpoint signal which is equal among the data set generation mode and the failure detection mode or results, at equal measuring conditions in terms of measurement environment and degree of wear of the motorized system (120), in less than 10% variation of the measured signals.

14. Apparatus according to claim 12 or 13, configured to present the detector output value to a user, or inform the user when the detector output value (86) fulfills a predetermined criterion which is indicative of a situation wherein the presence or immanence of the failure or degradation of the motorized system (120) is likely to occur.

15. Method for detecting a presence or immanence of a failure or degradation of a motorized system (120) comprising one or more closed-loop controlled electro motors (122), the method comprising

measuring one or more signals (84) within one or more control loops (124) of the one or more closed-loop controlled electro motors (122) or influenced by the one or more control loops (124) during an operation of the one or more closed-loop controlled electro motors (122) so as to obtain a measured signal, and

mapping, using a parametrizable mapping, the measured signal onto a detector output value (86) informing on the presence or immanence of the failure or degradation of the motorized system (120),

the parametrizable mapping being determined by use of a data set (62) gained by the method according to any of claims 1 to 9.

Fig.1

providing a set of settings of controller parameters

measuring control loop related signals per setting

measured signal (1)
measured signal (2)
" (3)
" (4)

Fig. 2

62

| ① | measured signal (1) |
| ② | '' (2) |
| ⋮ | |

70

training

72

Fig. 3

parametrization

131

130

107

processor

122

132

128

124

120

controller

controller

motor

sensor

126

80

user output

100

88

parametrization

72

86

82

Fig. 4

I/O

102

84

Europäisches
Patentamt

European
Patent Office

Office européen
des brevets

# EUROPEAN SEARCH REPORT

**Application Number**

EP 24 21 0667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 539 549 B1 (DISCENZO FRED [US] ET AL) 26 May 2009 (2009-05-26) * column 1, line 17 - column 5, line 7 * * column 7, line 45 - column 11, line 42 * * column 17, line 37 - column 18, line 12 * * figures 1,2,14g,17,25 * | 1-15 | INV. G05B23/02 H02P29/02 |
| Y | GOBINATH S ET AL: "Deep perceptron neural network with fuzzy PID controller for speed control and stability analysis of BLDC motor", SOFT COMPUTING, SPRINGER BERLIN HEIDELBERG, BERLIN/HEIDELBERG, vol. 24, no. 13, 19 November 2019 (2019-11-19), pages 10161-10180, XP037149977, ISSN: 1432-7643, DOI: 10.1007/S00500-019-04532-Z [retrieved on 2019-11-19] * the whole document * | 1-15 | |
| Y | HARIKRISHNA BILLA ET AL: "Machine Learning based Fault Detection for Non-Linear Systems", 2023 9TH INTERNATIONAL CONFERENCE ON SMART COMPUTING AND COMMUNICATIONS (ICSCC), IEEE, 17 August 2023 (2023-08-17), pages 647-652, XP034483798, DOI: 10.1109/ICSCC59169.2023.10335072 [retrieved on 2023-12-06] * the whole document * | 1-15 | **TECHNICAL FIELDS SEARCHED (IPC)**<br><br>H02P<br>G05B |

The present search report has been drawn up for all claims

| Place of search | Date of completion of the search | Examiner |
|---|---|---|
| Munich | 31 March 2025 | Postemer, Patricia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

## ANNEX TO THE EUROPEAN SEARCH REPORT
## ON EUROPEAN PATENT APPLICATION NO.

EP 24 21 0667

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | Publication date | Patent family member(s) | Publication date |
|---|---|---|---|
| US 7539549 B1 | 26-05-2009 | NONE | |

EPO FORM P0459

For more details about this annex : see Official Journal of the European Patent Office, No. 12/82